# EUROPÄISCHE PATENTSCHRIFT

(11) **EP 0 867 345 B1**
(45) Veröffentlichungstag und Bekanntmachung des Hinweises auf die Patenterteilung: **30.07.2003**
(21) Anmeldenummer: 98105387.9
(22) Anmeldetag: 25.03.1998
(51) Int. Cl.: B60R 21/045, B62D 25/14

(54) **Cockpitquerträger in einem Kraftfahrzeug**
Crossbar for a dashboard of a motor vehicle
Traverse de renfort de tableau de bord pour véhicule automobile

(30) Priorität: 27.03.1997 DE 19712902
(43) Veröffentlichungstag der Anmeldung: 30.09.1998
(73) Patentinhaber: smart gmbh, 71032 Böblingen (DE)
(72) Erfinder: Henseler, Wolfgang, 71083 Herrenberg (DE); Schick, Ulrich, 72202 Nagold-Vollmaringen (DE)
(74) Vertreter: Weiss, Klaus

(56) Entgegenhaltungen:
- EP-A- 0 678 425
- DE-A- 2 407 178
- DE-A- 2 439 916
- DE-A- 2 520 479
- US-A- 3 984 128

## Beschreibung

Die Erfindung betrifft einen Cockpitquerträger in einem Kraftfahrzeug gemäß dem Oberbegriff des Anspruches 1.

Aus der DE 24 39 916 A ist ein Cockpitquerträger gemäß dem Oberbegriff des Anspruchs 1 bekannt.

Aus der DE 2 312 202 A1 ist ein biegesteifer Cockpitquerträger bekannt, der in Fahrzeugquerrichtung ausgerichtet an den Seiten des Kraftfahrzeuges festgelegt ist. An einer in Fahrzeughochrichtung weisenden, in Fahrzeugquerrichtung verlaufenden und gegen den Fahrzeuginnenraum gerichteten Außenwand des Cockpitquerträgers ist ein Aufprallschutzelement befestigt, welches die Knie eines Fahrzeuginsassen bei einem Crash stützen soll, und welches dabei energieverzehrend verformt wird. Hierzu ist das Aufprallschutzelement selbst als ring- oder kastenförmiger Hohlkörper ausgebildet, der einiges an Bauraum belegt, und der dennoch bei großer Belastung keinen Verformungsweg mehr zur Verfügung stellen kann, der in diesem Bereich noch eine Kraftbegrenzung für den Insassen ermöglicht. Der biegesteife Cockpitquerträger trägt zum Abbau der Aufprallenergie des anprallenden Insassen nicht bei.

Auch in der DE 39 05 950 A1 ist ein biegesteifer, aber Zweiteiliger Hohlprofilträger beschrieben, auf dem ein energieverzehrend nachgiebiger Deformationskörper festgelegt ist.

In der DE 1 239 583 B1 ist ein biegesteifer Cockpitquerträger beschrieben, an dem in Richtung zum Fahrzeuginnenraum ein Stoßschutz festgelegt ist.

Aus der US 5 273 314 A ist ein Cockpitquerträger in einem Kraftfahrzeug bekannt, der im Vorbau auf Höhe einer Instrumententafel in Fahrzeugquerrichtung ausgerichtet, mit je einem Ende an den gegenüberliegenden Seiten des Kraftfahrzeuges festgelegt ist, und der durch seinen biegesteifen Querschnitt zur Versteifung des Vorbaues dient. Mit diesem Querträger sind abkragende Stützteile verbunden, an deren freien Enden eine Aufprallschutzplatte festgeschraubt ist. Bei Belastung der Aufprallschutzplatte vom Fahrzeuginnenraum aus, durch einen anprallenden Insassen, werden die Stützteile verformt und bauen dabei Aufprallenergie ab. Der Cockpitquerträger behält dabei seine Lage und Form bei.

Des weiteren sind aus der US 4 978 136 A, der US 5 037 130 A, der US 5 482 319 A und der DE 195 02 226 C1 ebenfalls biegesteife Cockpitquerträger in einem Kraftfahrzeug bekannt, an welchen eine Aufprallschutzplatte über dazwischenliegende und bei einem Crash gezielt verformbare Stützteile gelagert ist. Der Energieabbau bei einem Aufprall erfolgt hier zu Beginn in der Aufprallschutzplatte und dann in den Stützteilen.

In der DE 2 061 595 A1, der DE 2 248 003 A1, der DE 23 35 958 A1, und der DE 40 16 670 C2 sind jeweils Träger für ein Aufprallschutzpolster beschrieben, wobei der Träger durch seine Verbiegung beim Crash zur Stoßabsorption dient. Ein derartiger Träger ist mit einem Cockpitträger nicht vergleichbar und kann den Vorbau beim Crash nicht anhaltend versteifen.

Die Aufgabe der Erfindung besteht darin, einen biegesteifen Cockpitquerträger für den Abbau der in ein Knieaufprallschutzelement eingeleiteten Aufprallenergie zu verbessern.

Die Aufgabe wird durch die kennzeichnenden Merkmale des Patentanspruches 1 gelöst.

Ein biegesteifer Cockpitquerträger in einem Kraftfahrzeug hat die Funktion, den Vorbau zu stabilisieren, und kann deshalb hohe Kräfte aufnehmen. Deshalb kann an diesem unter anderem auch ein Knieaufprallschutzelement festgelegt werden, welches die durch einen bei einem Crash anprallenden Insassen eingeleiteten Kräfte zu einem Teil durch seine Verformung absorbieren kann und damit die Belastung des Insassen beim Anprall reduziert.

Nach der möglichen Verformung des Knieaufprallschutzelementes geht dieses auf Block, was bedeutet, daß die Gegenkraft auf den Insassen sprunghaft ansteigt. Hier kann nun der in besonderer Weise ausgebildete Cockpitquerträger durch die gezielte Verformung einer stoßnahen Außenwand weiter Aufprallenergie abbauen und als Kraftbegrenzer für den Insassen dienen.

Der Cockpitquerträger umfaßt, um eine ausreichende Steifigkeit zu erhalten, verbindende Rippen zwischen den beiden in Fahrzeughochrichtung weisenden, etwa parallel zueinander beabstandet verlaufenden Außenwänden, die den Hohlraum des Cockpitquerträgers begrenzen. Im Aufprallbereich der Knie des zugeordnet sitzenden Insassen ist hinter der stoßnahen Außenwand des Cockpitquerträgers mindestens eine Kammer ausgebildet, an welche die Rippen nur bis zur stoßabgewandten Wand heranreichen, und deren stoßnahe Wand ab einer vorbestimmten Anprallbelastung unter Energieabsorption eindrückbar ist. Es kann für einen kontinuierlichen Energieabbau auch sinnvoll sein, mehrere dieser Kammern in Stoßrichtung hintereinander anzuordnen, und für eine hohe Energieabsorption diese Kammern mit bei Belastung ebenfalls energieabsorbierendem Schaum auszufüllen.

Eine Kammer, die durch in etwa in Fahrzeugquerrichtung parallel verlaufende Wände begrenzt wird, läßt dabei in einem breiten Bereich die Verformung der stoßnahen Wand zu, und ist in diesem Bereich in etwa auch gleichmäßig auf eine maximale Verformung bis zum Anschlag an die stoßabgewandte Wand begrenzt.

Für einen hohen Verformungswiderstand des Cockpitquerträgers können die Rippen mit einer der Höhe der Außenwände entsprechenden Höhe ausgebildet sein und etwa wabenförmige Hohlkammern begrenzen.

Bei der Stoßbelastung des Knieaufprallschutzelementes nimmt der Verformungswiderstand der Anordnung zu. Bei einem leichteren Anprall des Insassen wird zumeist nur das Knieaufprallschutzelement verformt, welches einfach ausgetauscht werden kann, während bei einer starken Stoßbelastung auch im Cockpitquerträger Energie absorbiert wird, dieser aber, durch die Rippen versteift, weiterhin als ein den Vorbau stabilisierender Träger wirkt.

Das Knieaufprallschutzelement kann derart am Cockpitquerträger festgelegt werden, daß es nach der Verformung der stoßnahen Wand der Kammer im Cockpitquerträger, bei einer starken Stoßbelastung durch die weiter eingeleitete Kraft, tordierend auf den Cockpitquerträger einwirkt und damit weiterhin Aufprallenergie abbaut.

Entsprechend den vorgegebenen Rahmenbedingungen können an einem derartigen Cockpitquerträger unterschiedlich verformbare Knieaufprallschutzelemente lösbar festgelegt werden und sind damit auch leicht austauschbar.

Weitere Vorteile und Ausgestaltungen gehen aus den Unteransprüchen und der Beschreibung hervor.

Die Erfindung ist nachstehend anhand einer Zeichnung näher beschrieben.

Es zeigen:
- Fig. 1: in einem Querschnitt nach der Linie I-I in Fig. 2 einen Cockpitquerträger mit einem Knieaufprallschutzelement, und
- Fig. 2: in einer Draufsicht den in Fahrtrichtung rechts liegenden Abschnitt des Cockpitquerträgers mit dem Knieaufprallschutzelement.

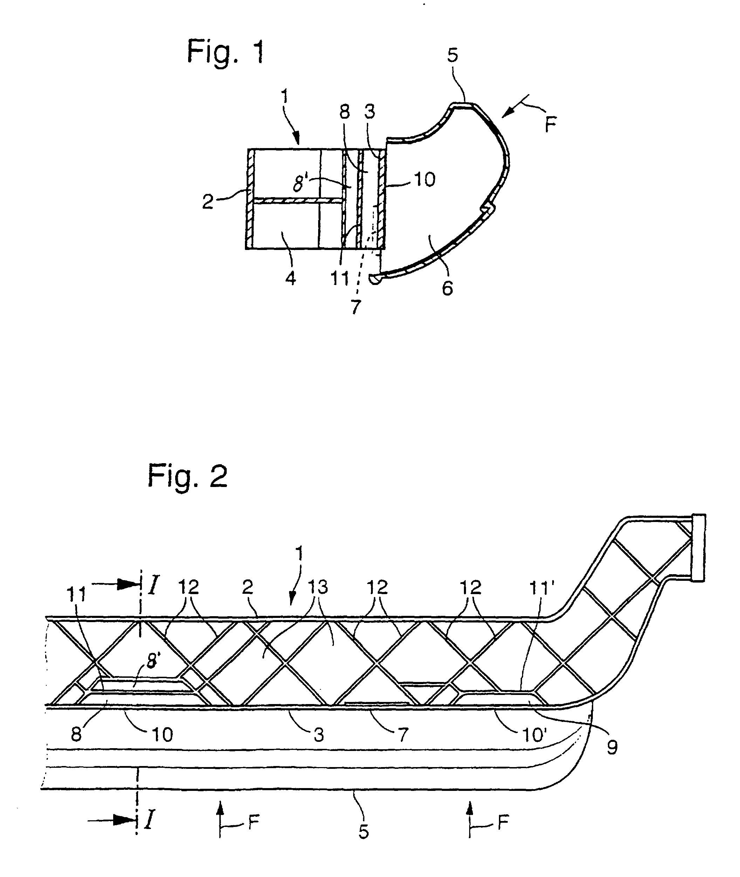

Die Figuren 1 und 2 zeigen einen Cockpitquerträger 1, der biegesteif ausgebildet in einem Kraftfahrzeugvorbau in bekannter Weise auf Höhe einer Instrumententafel in Fahrzeugquerrichtung ausgerichtet an den gegenüberliegenden Seiten des Kraftfahrzeuges festlegbar ist, und der dadurch den Vorbau versteift und zudem zur Festlegung einer Stirnwand, einer Instrumententafel und unterschiedlicher Aggregate dienen kann.

Der Cockpitquerträger 1 ist mit zwei in Fahrzeughochrichtung weisenden, etwa parallel zueinander beabstandet verlaufenden Außenwänden 2 und 3 gebildet, die einen Hohlraum 4 des Cockpitquerträgers 1 begrenzen, wobei an der Außenwand 3 ein Knieaufprallschutzelement 5 festgelegt ist.

Bei einem Anprall eines im Fahrzeuginnenraum auf den vorderen Sitzen sitzenden Insassen, insbesondere bei einem Crash, treffen dessen Knie (Pfeil F) auf das Knieaufprallschutzelement 5 auf, welches als Hohlkörper 6 ausgebildet ist, auch mit energieabsorbierendem Schaum gefüllt sein kann, und durch seine Verformung Aufprallenergie abbaut. Das Knieaufprallschutzelement 5 hintergreift mit mehreren Laschen 7 die stoßnahe Außenwand 3 des Cockpitquerträgers 1 und ist damit an diesem arretiert und/oder durch weitere, nicht dargestellte Befestigungen gehalten.

Im vorgesehenen Aufprallbereich des linken und rechten Knies des Insassen ist hinter der stoßnahen Außenwand 3 des Cockpitquerträgers 1 jeweils eine Kammer 8 und 9 ausgebildet, die durch eine stoßnahe Wand 10 bzw. 10', die einen Abschnitt der Außenwand 3 des Cockpitquerträgers 1 bildet, und eine stoßabgewandte Wand 11 bzw. 11' begrenzt ist. Die stoßnahe Wand 10 bzw. 10' der Kammer 8 bzw. 9 kann ab einer vorbestimmten Stoßbelastung durch den Insassen unter Energieabsorption eingedrückt werden. Damit wirken die Kammern 8 und 9 im in seiner Ausrichtung biegesteifen Cockpitquerträger 1 als Kraftbegrenzer, durch die der gegen den anprallenden Insassen gerichtete Widerstand und damit die Verletzungsgefahr reduziert wird. Der hier links dargestellten Kammer 8 ist eine weitere verformbare Kammer 8' in Stoßrichtung nachgeschaltet, welche ebenfalls noch biegeweicher als die verrippte Umgebung reagiert und gezielt zu einem weiteren Energieabbau beiträgt. Der Verformungswiderstand nimmt dabei von der Verformung des Knieaufprallschutzelementes 5 ausgehend bis zur abgeschlossenen Verformung der Kammern 8, 8' bzw. 9 zu, oder ist über die Form und die Wandstärken der Cockpitquerträgerwände und das Material des Cockpitquerträgers 1 variabel bestimmbar. Weiterhin kann ein bei Belastung energieabsorbierender Schaum in den Kammern 8, 8', 9 zum Energieabbau beim Anprall des Insassen beitragen.

Die stoßnahe Wand 10 bzw. 10' der Kammern 8, 9 kann über ihre Breite bis zum Anschlag an die parallelverlaufende, stoßabgewandte Wand 11 bzw. 11' verformt werden.

Die Außenwände 1 und 3 des Cockpitquerträgers 1 sind durch Rippen 12 verbunden, die außerhalb der Kammern 8, 8' und 9 enden. Durch diese Rippen 12 wird eine weitere Verformung des Cockpitquerträgers 1 bei der Stoßbelastung des Knieaufprallschutzelementes 5 durch den anprallenden Insassen mit stark erhöhtem Widerstand blockiert.

Um dem Cockpitquerträger 1 eine hohe Biegesteifigkeit zu geben, sind die Rippen 12 mit einer der Höhe der Außenwände entsprechenden Höhe ausgebildet und zum Verlauf der Außenwände 2 und 3 in etwa diagonal überkreuzend angeordnet, so daß sich wabenförmige Hohlkammern 13 ergeben, die zusätzlich durch eine querverlaufende Mittelwand verstärkt werden können.

Bei sehr hohen durch den Insassen eingeleiteten Anprallkräften wird das Knieaufprallschutzelement 5 durch seine Krafteinleitung tordierend auf den Cockpitquerträger 1 einwirken und dadurch ohne Biegung des Querträgers 1 weiter Energie abbauen können.

Entsprechend den vorgegebenen Rahmenbedingungen können unterschiedlich verformbare Knieaufprallschutzelemente 5 am Cockpitquerträger 1 festgelegt werden.

## Patentansprüche

1. Cockpitquerträger in einem Kraftfahrzeug, der biegesteif ausgebildet, im Vorbau auf Höhe einer Instrumententafel in Fahrzeugquerrichtung ausgerichtet an den gegenüberliegenden Seiten des Kraftfahrzeuges festgelegt ist, und dessen beide in Fahrzeughochrichtung weisenden, etwa parallel zueinander beabstandet verlaufenden Außenwände, den Hohlraum des Cockpitquerträgers begrenzen, wobei der stoßnahen Außenwand mindestens ein Knieaufprallschutzelement vorgelagert ist, und wobei die in Fahrzeugquerrichtung verlaufenden Außenwände (2 und 3) des Cockpitquerträgers (1) durch Rippen (12) verbunden sind, **dadurch gekennzeichnet, daß** im Aufprallbereich der Knie (Pfeil F) eines zugeordnet sitzenden Insassen hinter der stoßnahen Außenwand (3) des Cockpitquerträgers (1) mindestens eine Kammer (8, 9) ausgebildet ist, an welche die Rippen (12) nur bis zur stoßabgewandten Wand (11 bzw. 11') heranreichen, und deren stoßnahe Wand (10 bzw. 10') ab einer vorbestimmten Stoßbelastung unter Energieabsorption eindrückbar ist.

2. Cockpitquerträger nach Anspruch 1,
**dadurch gekennzeichnet,**
**daß** die Kammer (8, 9) durch in Fahrzeugquerrichtung in etwa parallel verlaufende Wände (10, 11 bzw. 10', 11' ) begrenzt wird.

3. Cockpitquerträger nach Anspruch 1,
**dadurch gekennzeichnet,**
**daß** an die Kammer (8) eine weitere Kammer (8') in Stoßrichtung anschließend angeordnet ist.

4. Cockpitquerträger nach einem der Ansprüche 1 oder 3,
**dadurch gekennzeichnet,**
**daß** die Kammer (8, 8', 9) mit bei Belastung energieabsorbierendem Schaum gefüllt ist.

5. Cockpitquerträger nach Anspruch 1,
**dadurch gekennzeichnet,**
**daß** die Rippen (12) mit einer der Höhe der Außenwände (2, 3) entsprechenden Höhe ausgebildet sind und etwa wabenförmige Hohlkammern (13) begrenzen.

6. Cockpitquerträger nach Anspruch 1
**dadurch gekennzeichnet,**
**daß** das Knieaufprallschutzelement (5) durch seine Krafteinleitung tordierend auf den Cockpitquerträger (1) einwirkt.

## Claims

1. Dashboard cross-member in a motor vehicle, of a bending-resistant design, aligned with the vehicle transverse direction, is fixed in the front structure, on a level with an instrument panel, to the oppositely lying sides of the vehicle, the two substantially parallel, mutually spaced external walls of which, pointing in the vehicle vertical direction, bound the cavity of the dashboard cross-member, at least one knee-impact protective element being front-mounted on the external wall taking the direct impact, and the external walls (2 and 3) of the dashboard cross-member (1) extending in the vehicle transverse direction being linked by ribs (12)
**characterised in that**
behind the direct-impact external wall (3) of the dashboard cross-member (1), a least one chamber (8, 9) is provided in the region where the knee of a seated passenger would impact (arrow F), where the ribs (12) extend only as far as the wall (11 respectively 11') remote from the impact, and the direct-impact wall (10 respectively 10') can be pushed in over and above a predefined impact load.

2. Dashboard cross-member as claimed in claim 1,
**characterised in that**
the chamber (8, 9) is bounded by substantially parallel walls (10, 11 respectively 10', 11') extending in the vehicle transverse direction.

3. Dashboard cross-member as claimed in claim 1,
**characterised in that**
another chamber (8') is provided adjoining the chamber (8) in the impact direction.

4. Dashboard cross-member as claimed in one of claims 1 or 3,
**characterised in that**
the chamber (8, 8', 9) is filled with a foam which absorbs energy when subjected to force.

5. Dashboard cross-member as claimed in claim 1,
**characterised in that** t
the ribs (12) are of the same height as the height of the external walls (2, 3) and bound cavities (13) of a substantially honeycomb structure.

6. Dashboard cross-member as claimed in claim 1,
**characterised in that**
the knee-impact protective element (5) acts on the dashboard cross-member (1) with a twisting effect due to the way it transmits force.

## Revendications

1. Support transversal d'habitacle, qui est disposé dans un véhicule automobile, est résistant à la flexion et est fixé dans la partie avant, à hauteur d'un tableau de bord, en étant orienté dans la direction transversale du véhicule, sur les côtés opposés du véhicule automobile, et dont les deux parois extérieures, qui sont orientées dans la direction verticale du véhicule et s'étendent approximativement parallèlement à distance l'une de l'autre, délimitent la cavité du support transversal d'habitacle, et dans lequel au moins un élément de protection des genoux contre un choc est disposé en avant de la paroi extérieure côté choc, et dans lequel les parois extérieures (2 et 3), qui s'étendent dans des directions transversales du véhicule, du support transversal (1) d'habitacle sont reliées par des membrures (12), **caractérisé en ce que** dans la zone du choc du genou (flèche F) d'un passager assis associé est formée, en arrière de la paroi extérieure (3), soumise au choc, du support transversal (1) d'habitacle, est formée au moins une chambre (8, 9), au niveau de laquelle les membrures (12) s'étendent seulement jusqu'à la paroi (11 ou 11') tournée à l'opposé du choc, et dont la paroi (10 ou 10') côté choc peut être enfoncée à partir d'une charge de choc prédéterminée, moyennant une absorption d'énergie.

2. Support transversal d'habitacle selon la revendication 1, **caractérisé en ce que** la chambre (8, 9) est limitée par des parois (10, 11 ou 10, 11') qui s'étendent approximativement parallèlement dans la direction transversale du véhicule.

3. Support transversal d'habitacle selon la revendication 1, **caractérisé en ce qu'**une autre chambre (8') est disposée d'une manière contiguë à la chambre (8) dans la direction d'un choc.

4. Support transversal d'habitacle selon l'une des revendications 1 ou 3, **caractérisé en ce que** la chambre (8, 8', 9) est remplie par une mousse qui absorbe l'énergie lors d'une contrainte.

5. Support transversal d'habitacle selon la revendication 1, **caractérisé en ce que** les membrures (12) sont réalisées avec une hauteur qui correspond à la hauteur des parois latérales (2, 3) et limitent des chambres évidées (13) approximativement en forme de nids d'abeilles.

6. Support transversal d'habitacle selon la revendication 1, **caractérisé en ce que** l'élément (5) de protection des genoux contre un choc agit au moyen de son application de force, avec un effet de torsion sur le support transversal d'habitacle (1).
